**Europäisches Patentamt**

(19) **European Patent Office**

**Office européen des brevets**

(11) Publication number : **0 335 728 B1**

# (12) EUROPEAN PATENT SPECIFICATION

(45) Date of publication of patent specification :
28.09.94 Bulletin 94/39

(51) Int. Cl.⁵ : **F23D 21/00,** C03B 5/235,
F27D 7/02, F27D 23/00,
F23D 14/84

(21) Application number : **89303189.8**

(22) Date of filing : **31.03.89**

(54) **Method and apparatus for gas lancing.**

(30) Priority : **01.04.88 US 176488**
**16.02.89 US 310161**

(43) Date of publication of application :
**04.10.89 Bulletin 89/40**

(45) Publication of the grant of the patent :
**28.09.94 Bulletin 94/39**

(84) Designated Contracting States :
**AT BE CH DE FR GB IT LI LU NL SE**

(56) References cited :
**GB-A- 2 030 280**
**US-A- 3 353 941**
**US-A- 4 444 586**

(73) Proprietor : **THE BOC GROUP, INC.**
**575 Mountain Avenue**
**Murray Hill New Jersey 07974 (US)**

(72) Inventor : **Yap, Loo Tjay**
**3K Hibben**
**Faculty Road**
**Princeton New Jersey 07540 (US)**

(74) Representative : **Wickham, Michael et al**
**c/o Patent and Trademark Department**
**The BOC Group plc**
**Chertsey Road**
**Windlesham Surrey GU20 6HJ (GB)**

## Description

The present invention relates to a method and apparatus for providing heat transfer to a furnace which employ a burner and a lance to supply a reaction-rate enhancing gas (eg oxygen) under the burner flame. Such an apparatus is known from document US-A- 3 353 941

Generally, efficiencies in direct-fired industrial processes, for example, the making of glass are limited by the mechanics of heat transfer. Heat transfer is relatively efficient for thermal loads in the vicinity of the flame. However, in practical applications the thermal load is not located concentrically around the flame as would be desirable for efficient heat transfer. Instead, most thermal loads accept heat flux through planar or moderately curved surfaces such as the horizontal surface of a glass/metal melt in a glass/melt furnace, the vertical wall of a heat exchanger in a boiler or the curved surface of a charge of granular material in a rotary-kiln furnace.

It is known that the addition of a reaction-rate enhancing gas improves the heat transfer of a direct-fired system. The term "reaction-rate enhancing gas" as used herein includes any gas that will influence the desired reaction in a positive manner, for example, oxygen, oxygen-enriched air, mixtures of oxygen and other gases such as acetylene, and the like. This is because the flame temperature and thereby the transfer of heat from the flame to the thermal load will be increased. Additionally, the reduction of nitrogen flowing through the combustion system diminishes exhaust loses.

Although the addition of a reaction-rate enhancing gas increases heat transfer efficiency, there have been efforts to improve heat transfer by altering the relative positioning of the burner and the pipe or lance used to transmit the rate-enhancing gas to the system. Conventionally, an oxygen jet flow is introduced between the flame and the thermal load through an axisymmetirc lance with the ejection port of the lance typically positioned adjacent the burner. As used herein, the term "axisymmetric" means that a cross-section of the gas jet or flame at the point of exit from the lance or burner taken perpendicular to the longitudinal axis of the flow of the jet or flame is essentially circular. "Nonaxisymmetric" or "nonaxisymmetrically" means that the cross-section is essentially non-circular.

In such systems, the introduction of oxygen using an axisymmetric lance results in the formation of a narrow, pencil-shaped, high-temperature zone along the length of the flame. The heat flux to the thermal load is greater from the oxygen-intensified zone than from the rest of the flame. As a result, the thermal load is exposed to high localized heat fluxes which result in unevenly heated areas in the thermal load, conventionally refered to as "hot spots". Uneven heating limits the efficiency and capacity of the furnace and adversely affects product quality.

Another method of improving heat transfer is disclosed in Bienus et al US Patent No 4,444,586. An axisymmetric oxygen/fuel lance is directed perpendicular to the melt surface in a reverberatory furnace for melting copper so that the flame is in head-on contact with a portion of the copper. The flame is produced by an axisymmetric oil atomizer with a (concentric) coannular oxygen supply. This arrangement produces enhanced heat transfer only very local to the area of flame impingement on the copper.

The average static pressure in a jet of a reaction-rate enhancing gas is lower than the ambient pressure; how much lower being dependent on the density and velocity of the jet flow. This observation can be derived from a quantitative analysis of the governing momentum equations.

Virtually all flames produced in industrial furnaces are essentially isobaric (low Mach number). This can be ascertained by focusing on the flow across the flame on a length scale of the order of the flame thickness. In such an analysis, flame curvature can be neglected, even for turbulent flames. A standard order-of-magnitude analysis leads to the conclusion that the viscosity effects on the pressure drop across the flame can be neglected as well.

Applicant has discovered that the reduced static-pressure field induced by a dense (cold) jet can efficiently displace and deform an isobaric, less dense hot flame. By appropriately positioning the jet between the thermal load and the flame, and by employing a non circular or relatively flat jet, the flame is drawn toward the low static-pressure field induced by the colder, ie flattened jet. The flame is also deformed toward the non circular shape of the cold jet. This results in more favorable flame placement and geometry control which increases the efficiency of the flame to transfer heat to the entire thermal load without the formation of hot spots.

According to the present invention there is provided an apparatus for providing relatively uniform heat transfer to a surface to be heated comprising a burner able in use to provide a flame extending over said surface and a gas lance having means for emitting a reaction-rate enhancing gas "non circularly" and being positioned so as in use to create an aerodynamically reduced pressure field thereby deforming and displacing the flame toward the surface. The term burner as generally known and used herein describes a device which emits a fuel or a fuel in combination with an oxidant.

The burner disclosed in accordance with the present invention includes not only a fuel outlet to emit a fuel alone or a fuel in combination with an oxidant, but also a gas lance (or passage) through which a reaction rate-enhancing gas is emitted.

A non circular shaped fuel outlet or burner outlet may be employed, preferably having a shape similar to the lance. As a result, the fuel as well as the gas jet momentum and relative flame direction allow greater control over the flame position, shape and temperature which leads to even more favorable heat-transfer characteristics over conventional lancing arrangements and techniques.

The lance for ejecting the reaction-rate enhancing gas has an inlet end and terminates in a non circular distal or gas outlet end. The outlet end preferably has a substantially wider opening than the inlet end and is preferably flattened (relative to a conventional circular outlet) to thereby to provide a non circular outflow of said gas.

The exit of the outlet end of the lance is defined by a pair of outermost opposed points such that a plane passing through the outermost opposed points is non-parallel and typically generally perpendicular to a plane bisecting the lance and the burner. Thus, the flame and the gas jet can be oriented in such a manner that optimum flame deformity and displacement are obtained.

The lance may be used with a conventional burner with an outlet of circular cross-section or with a burner preferably having an outlet shape similar to the shape of the outlet of the lance to generate thereby flattened flame (which may or may not be curved) which is more readily adapted to effect uniform heat transfer. The lance and the rest of the burner may be formed as a unitary article or may be separable from the burner. If desired, a lance according to the invention can be retro-fitted to a burner.

The non-circular gas jet creates an aerodynamically reduced static- pressure field between the flame and the thermal load. This reduced pressure field draws the flame toward the gas jet, ie displaces the flame. Hence, for example, by directing the gas jet close to the thermal load, the flame can be positioned close to the thermal load. Additionally, the non circular flow deforms the flame transversely to produce a high temperature flattened flame having a more uniform temperature profile. These desired characteristics are more pronounced when the burner or the fuel outlet of the burner is also provided with a non circular profile, especially when the shape of the fuel outlet of the burner is similar to that of the lance.

The passage of the lance may be a single non circular channel or comprise a plurality of channels, wherein one or more of the channels may have an axisymmetric cross-section. In each case, the gas flow out of the lance is arranged to form a jet of flattened or non circular shape.

For example, the outlet end of the lance may have a rectangular or ellipsoid cross-section. The rectangular-shaped outlet end is preferably used in a conventional high-temperature furnace having a planar heating surface, while the ellipsoid-shaped outlet end is particularly suited for use in a rotary kiln wherein the surface of the thermal load is curved.

The burner or fuel outlet may be constructed with any non circular profile, but preferably has a shape similar to the shape of the lance. Matching shapes provide for optimum contact (typically over an enhanced surface area) between the flame and the gas jet thereby inducing optimal convective and radiant heat transfer.

Those skilled in the art will appreciate that at a point distant from the burner, there may be a degree of deforming of a nonvertically oriented flame as a result of a combination of flame buoyancy and decay of velocity. The distance from the outlet of the burner where natural deforming of the flame occurs is dependent on such factors as the Froude number. It is to be understood that reference to the shape of the flame produced in accordance with the present method refers to the flame upstream of where the natural deformation takes place.

The invention is now described by way of example with reference to the accompanying drawings in which like reference characters indicate parts, and in which:

FIGURE 1 is a perspective view of a typical axisymmetric lance of the prior art;

FIGURE 2 is a perspective view of one embodiment of the gas lance of the present invention having a single channel for heating a planar surface;

FIGURE 3 is a perspective view of an embodiment of the gas lance of the present invention having multiple channels;

FIGURE 4 is a perspective view of a single channel gas lance of the present invention for use in heating a curved surface;

FIGURE 5 is a perspective view of a multiple channel gas lance for use in heating a curved surface;

FIGURE 6A is a perspective view of a high-temperature furnace showing an example of the positioning of the gas lance/burner combination of the present invention;

FIGURE 6B is a cross-sectional view taken along line A-A of the burner/lance arrangement shown in FIGURE 6A showing displacement and deformation of the flame;

FIGURE 7A is a partial cross-sectional view of a burner incorporating a gas lance in which both the gas lance and the fuel outlet have similarly shaped outlet ends.

FIGURE 7B is a partial cross-sectional view of another burner incorporating a lance in which the lance has the same configuration as shown in FIGURE 3 and the fuel outlet is the same as that shown in FIGURE 6A.

FIGURE 7C is a partial cross-sectional view of still another burner incorporating a lance in which the fuel outlet and the lance each have a curved profile similar to that shown for the lance in FIGURE 4.

FIGURE 8 is a schematic view of the relationship between the flame and thermal load in a prior art furnace with a planar heat-accepting surface;

FIGURE 9 is a schematic view of the relationship between the flame and the thermal load in furnace with a planar heat-accepting surface in accordance with the present invention;

FIGURE 10A is a horizontal temperature profile across the thermal load in the direction perpendicular to the flame direction as produced by a prior art lance;

FIGURE 10B is a horizontal temperature profile across the thermal load in the direction perpendicular to the flame direction as produced by a lance of the present invention;

FIGURE 11A is a vertical temperature profile across a flame produced by a prior art lance taken along the line B-B in FIGURE 6B;

FIGURE 11B is a vertical temperature profile across a flame produced by a lance of the present invention taken along the line B-B in FIGURE 6B;

FIGURE 12A is a graph showing horizontal temperature profiles of a flame downstream of a burner in the absence of an oxygen jet;

FIGURE 12B is a graph showing horizontal temperature profiles of a flame downstream of a burner employing a conventional axisymmetric lance;

FIGURE 12C is a graph showing horizontal temperature profiles of a flame downstream of a burner employing a non circular lance in accordance with the present invention;

FIGURE 13 is a graph plotting the spatial temperature distribution in a plane Y=0 (FIGURE 7A); and

FIGURE 14 is a plot showing the spatial distribution of the isotherms in a plane Y=0 according to FIGURE 7A.

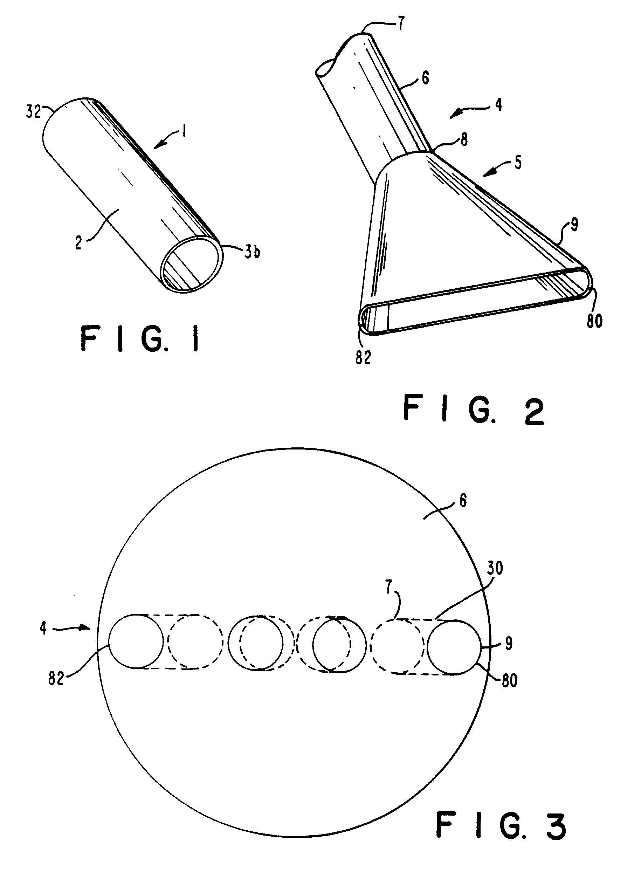

As shown in FIGURE 1, a typical prior art gas lance 1 has a substantially cylindrical body 1, formed between axisymmetric (ie circular) inlet and outlet ends 3a and 3b, respectively, so that the lance 1 has essentially the shape of a cylindrical pipe.

In contradistinction, the novel gas lances utilized in the method of the present invention have an outlet end which is non circular and diverges in the axial direction, thereby resulting in the emission of a non circular gas flow.

Referring to FIGURE 2, one embodiment of the lance 4 of the present invention includes an axisymmetric body 6 having an inlet end 7 and an opposed end 8 connected to a lance outlet end or tip 5 having an exit port 9. The lance tip 5 diverges non circularly in the longitudinal direction from the opposed end 8 of the body 6 to the outlet end 5 to provide an exit port 9 which is substantially wider than the inlet end 7 and presents a flattened substantially rectangular profile. The exit port 9 includes a pair of reference points 80 and 82 positioned at opposed ends of the lance tip 5 which are used to position the lance 4 with respect to the burner to provide optimum displacement and deformity of the flame as explained hereinafter. The rate-enhancing gas, eg oxygen, jet stream that leaves the tip 5 is non circular and conforms to the substantially rectangular profile of the exit port 9.

In operation, the gas flows through the body 6 from the inlet end 7. As the gas enters the tip 5 it assumes the non circular shape of the tip 5 to provide a non circular gas planar-like jet leaving the exit port 9.

Another embodiment of the lance 4 providing a non circular jet of gas is shown in FIGURE 3. The lance 4 includes a plurality of axisymmetric channels 30 housed in a substantially cylindrical body 6. Each channel 30 has an inlet end 7 and exit port 9 having reference points 80 and 82 out of which gas flows axisymmetrically. The channels 30 fan outwardly from the longitudinal axis of the body 6 so that the jets combine to provide a non circular gas planar-like flow as described above in connection with FIGURE 2. The channels 30 may project from the body 6 or be encased therein as shown in FIGURE 3. The latter embodiment is preferred to provide extra protection for the channels 30 in the furnace environment.

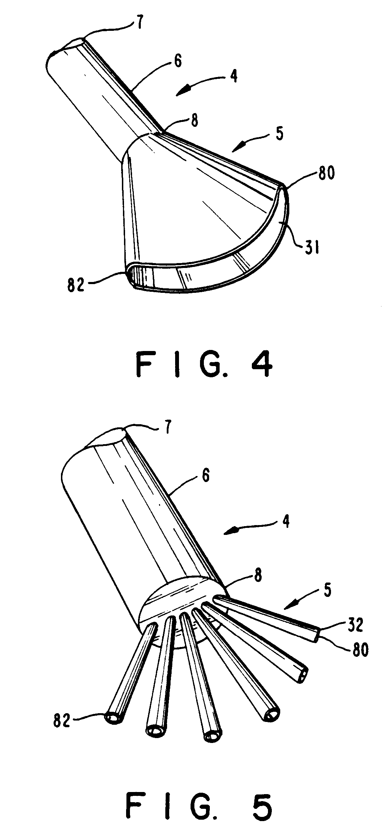

The lance 4 may also have an ellipsoid-like shape to facilitate heating of curved surfaces. Referring to FIGURE 4, the tip 5 of the lance 4 has a single exit port 31, generally ellipsoid in shape, which may be used in a rotary kiln wherein the thermal load has a curved surface.

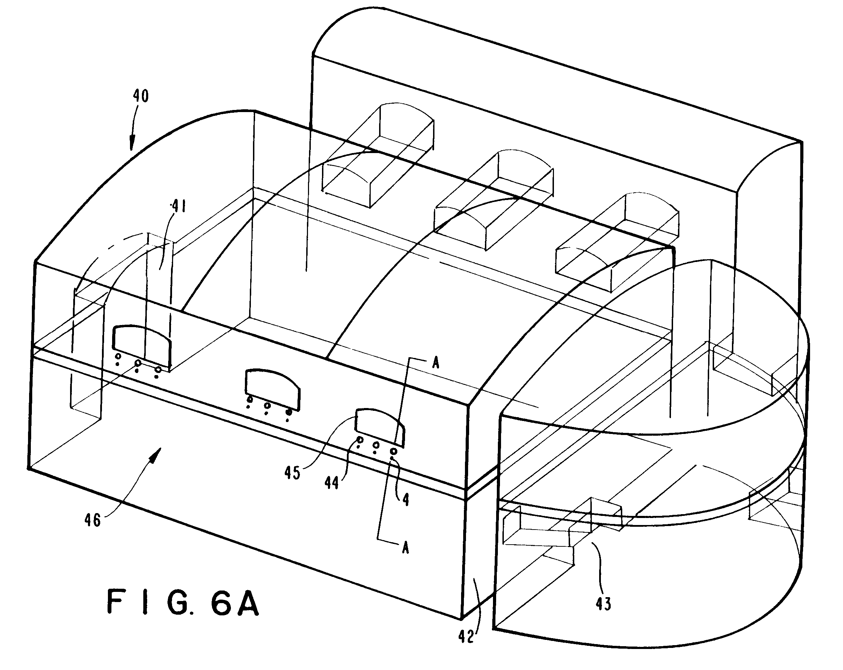

An embodiment of the lance 4 having generally ellipsoid shape is shown in FIGURE 5 wherein the gas jet stream flows out of individual axisymmetric channels 32. As described in connection with FIGURE 3, the channels 32 may be in the body 6 and likewise provide a non circular gas profile.

The relationship of the burner or the fuel outlet of the burner and gas lance in accordance with the present invention is shown in the environment of a typical glass furnace capable of producing 150 tons of glass per day. Referring to FIGURE 6A, batch material is introduced into one end 41 of the glass furnace 40. The furnace 40 includes a throat 42 leading to a forehearth 43 in which the melted glass is transferred for final product manufacturing.

Nine burners 44, three under each of three air supply ports 45, fire simultaneously across the glass melt 46. Gas lances 4 of the type shown in FIGURE 2 are placed below each of the burners 44 and set at an angle sufficient to both deform and displace the flame so that an essentially flat profile of a flame uniformly covers the entire thermal load. This provides a significantly enhanced heat-transfer rate while avoiding capacity limiting hot spots. The lances 4 may be set at an angle in the range of up to about +45° heading into the flame and about -45° away from the flame. Typically, good results are obtained when the jet is substantially parallel to the flame, that is when the longitudinal axes of the burner and the lance are generally parallel.

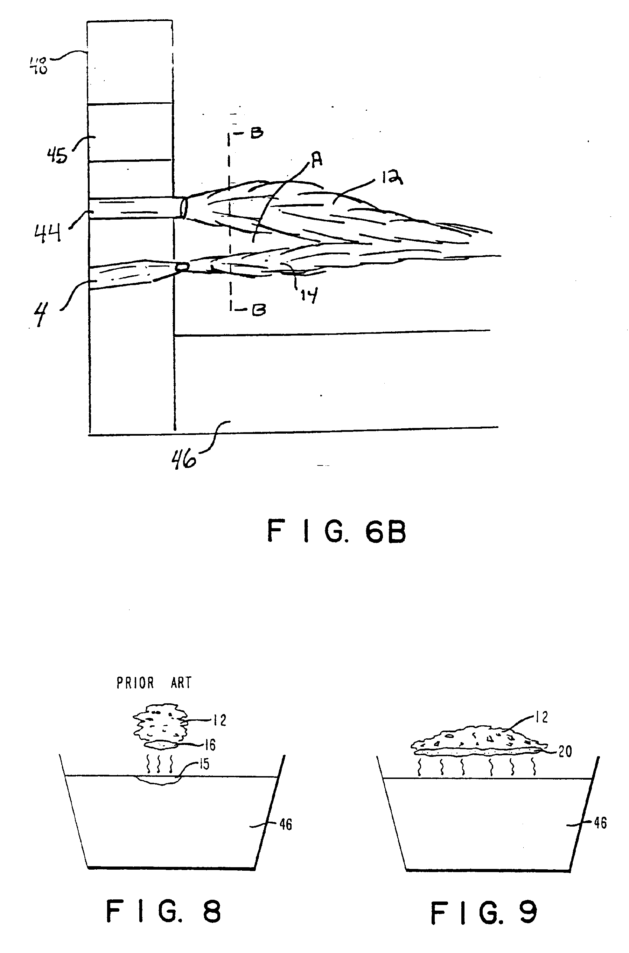

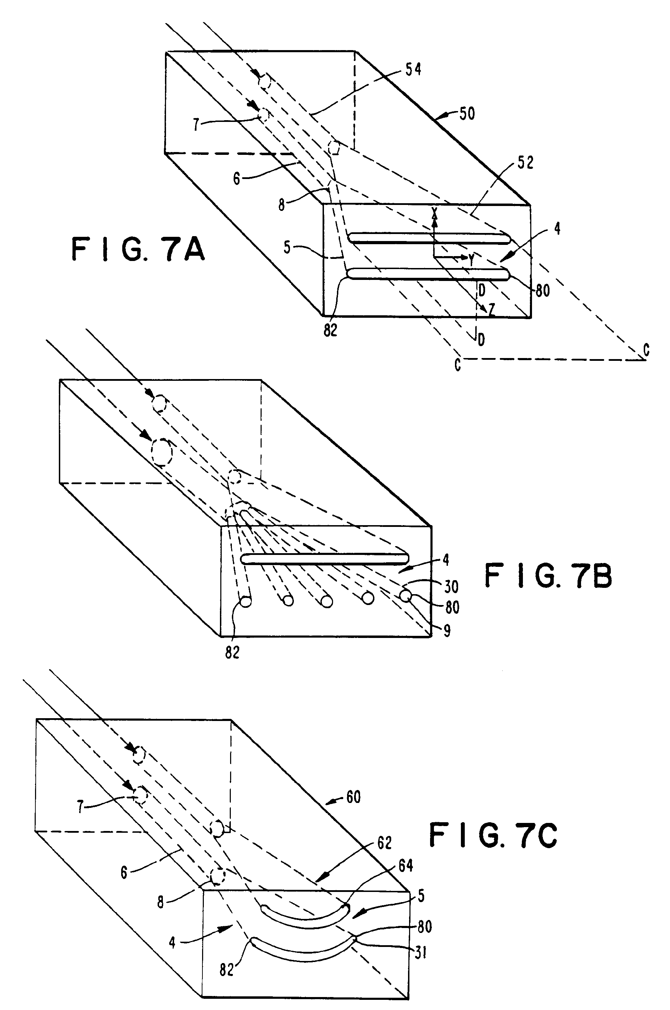

FIGURE 6B shows the deformation and displacement of the flame by the use of the gas lance 4 in the furnace environment described in FIGURE 6A. More specifically, a wall 48 of the furnace 40 houses the air-supplying ports 45, burners 44, and the novel lances 4 of the invention. The lances 4 are positioned between the burners 44 and the heat transfer surface, ie the melt 46 is approximately parallel to the burner 44. The gas 14 which flows non-circularly out of the lance 4 generates a low pressure field between the flame and the thermal load and draws the flame 12 downward over the melt 46 and flattens the flame 12 outwardly so that the flame 12 is uniformly spread over the entire melt 46 or greater surface area thereof than would be the case if a single axisymmetric lance were substituted for the lance according to the invention. FIGURES 7A-7C show an arrangment of a burner incorporating a fuel outlet and lance wherein each employs a non-axisymmetric outlet. More specifically, the arrangement of FIGURE 7A employs a lance of the type shown in FIGURE 2 within a burner 50 having a non circular fuel outlet 52 and an inlet end 54 which may be axisymmetric as specifically shown in FIGURE 7A. A plane C-C passing through reference points 80 and 82 at the respective sides of the exit port 9 is not parallel with and is preferably perpendicular to a plane D-D bisecting both the lance 4 and the fuel outlet 52. The plane D-D bisects both the lance and the burner.

FIGURE 7B illustrates another arrangement in which a lance substantially as shown and described in connection with FIGURE 3 is operatively positioned with respect to the fuel outlet substantially the same as that shown in FIGURE 7A. In the arrangement of FIGURE 7B both the burner and the lance have essentially similar flattened non circular outlets whereby a flattened flame is formed in the furnace.

FIGURE 7C shows a burner incorporating a fuel outlet and a lance in which the lance is substantially the same as that shown and described in connection with FIGURE 4. The burner 60 has a similar ellipsoid-shaped fuel outlet 62 with a single exit port 64 for use in a rotary kiln having the thermal load on a curved (concave) surface, whereby the (slightly convex) shape of the undersurface of the flame tends to match the concave shape of the load.

The embodiments shown in FIGURES 7A-7C result in a more geometrically uniform enhancement of radiant and convective heat transfer to the surface of the substrate. In addition, the aerodynamically reduced pressure field created by the gas jet can more easily draw the flame downward and position the flame closer to the surface of the substrate. However, it should be understood that acceptable results can be obtained using an axisymmetric burner with a non circular lance or a non circular burner and a non circular lance having different non circular outlets.

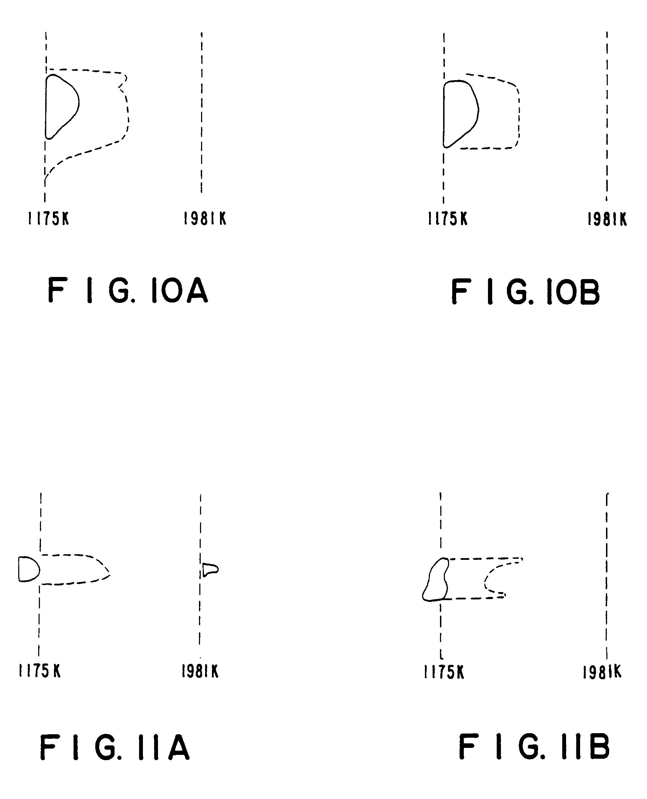

As shown in FIGURES 8 and 9, employment of the gas lance of the present invention which emits a non-circular profile of gas displaces the flame downward toward the jet and flattens the flame so that a uniform flattened flame at maximum flame temperature covers a greater surface area of the thermal load and eliminates undesirable hot spots.

Referring to FIGURE 8, the prior art glass furnace using conventional axisymmetric gas lances positioned between the burners and the thermal load creates undesirable localized hot spots. More specifically, the glass melt 46 residing in the furnace 40 is heated by the flame 12 forming a mixing zone 16. The mixing zone 16 of an axisymmetric flow of gas and the flame 12 results only in locally enhanced heat-transfer which causes uneven heating and the production of hot spots 15, and may even cause overheating of the melt 46.

As shown in FIGURE 9, a non circular gas lance positioned between the burner and the melt 46 as described above in connection with FIGURE 6B generates a flattened, non circular mixing zone 20. The pressure-induced deformation of the flame 12 results in more uniform temperature enhancement over a larger surface area. In this manner, the local heat flux and hence the local thermal-load temperature is kept uniform.

It will be readily appreciated by one skilled in the art that axisymmetric lances used in heating curved surfaces such as a rotary kiln also produce localized hot spots. The use of a non circular gas lance of the type described in connection with FIGURES 4 and 5 is effective in eliminating hot spots on curved surfaces as well.

Essentially, the pressure field generated by non circular high-velocity reaction-rate enhancing gas jet or jets positioned between the flame and the thermal load is used to (a) position the flame more favorably with respect to the thermal load, (b) tailor the flame shape to the thermal load, and (c) enhance the flame temperature uniformly over a large area. These benefits lead to a result which is reflected by the substantial elimination of hot spots. Moreover, by virtue of the present invention, the need for manipulating the thermal load to compensate for the local hot spots frequently formed in conventional furnaces is substantially reduced, thereby providing a substantial cost savings.

Example 1

Test comparing the subject non circular lances with conventional lances were conducted on a 9.2 m long by 7.1 m wide commercial glass furnace tank. Batch material was introduced at the doghouse end of the glass tank. As the batch was melted, the material moved toward the throat. Further refining took place in the working end. After the forehearth, the glass melt was ready for final product manufacturing. The full-rate of glass from the tank was 152 x $10^3$-203 x $10^3$ Kg (150-200 tons) per day.

Three burners, one under each of the three ports provided for the necessary heat (17.5 GJ/hr). The required air for combustion flowed through the regenerator, the ports, and over the burners (underport firing). An oxygen lance was mounted under each burner of port number three. The combustion gases were exhausted through opposite ports and regenerators. After a 15 minute cycle of firing from one set of ports, the firing side was reversed. In this manner, part of the exhaust energy of each previous cycle was recovered with the regenerators by preheating the combustion air.

Oxygen lances were mounted under each of the three burners of port number three on both firing sides. Conventional lances consisted of a stainless steel tube ID 6.35 mm (1/4 inch). Each lance introduced approximately 315 SLPM (Standard Litres Per Minute) of oxygen at an average velocity of 165 m/s. This oxygen provided for 4.9% of the total necessary oxygen.

Novel lances of the present invention incorporated a tip with four high velocity channels which directed jets in a horizontal plane in a fan-like manner, ie a substantially rectangular outflow profile, of the type show in FIGURE 3.

The choice of the angle of divergence of the oxygen jet angle was based on the objectives of providing a requisite amount of oxygen needed to tailor the flame by providing a wide low-pressure zone. The choice of the lance diameters was based on the objective of generating low pressure zones which control the position, geometry, and spatial intensification of the flame. The lances selected were matched to the existing heavy fuel oil burners. These burners produced turbulent diffusion flames with jet spreading angles of approximately 20 degrees. Average velocities of the cold oxygen jets of approximately 255 m/s were estimated to generate sufficiently low pressures to meet the above objectives.

To evaluate the performance of the conventional as well as the nonaxisymmetric oxygen lances, temperature measurements were taken. Two methods were used.

First, a scanning IR pyrometer provided temperature profiles along a straight line. Essentially, IR field stops limited the view of a spacially scanning solid-state detector to a small solid angle (60 usr). The radiance measurements were converted into temperature measurements assuming black-body behavior. The widely used black-body assuption limits the quantitative interpretation of the data in the usual manner. Independent temperature measurements were conducted using an optical pyrometer.

Second, a video camera was used to obtain qualitative temperature measurements within the furnace during firing and reversal. Generally, at the typically high temperatures of a furnace, a video camera detector is near saturation and the recorded images lack contrast. However, the visible images were converted to thermal images by the use of a neutral-density filter.

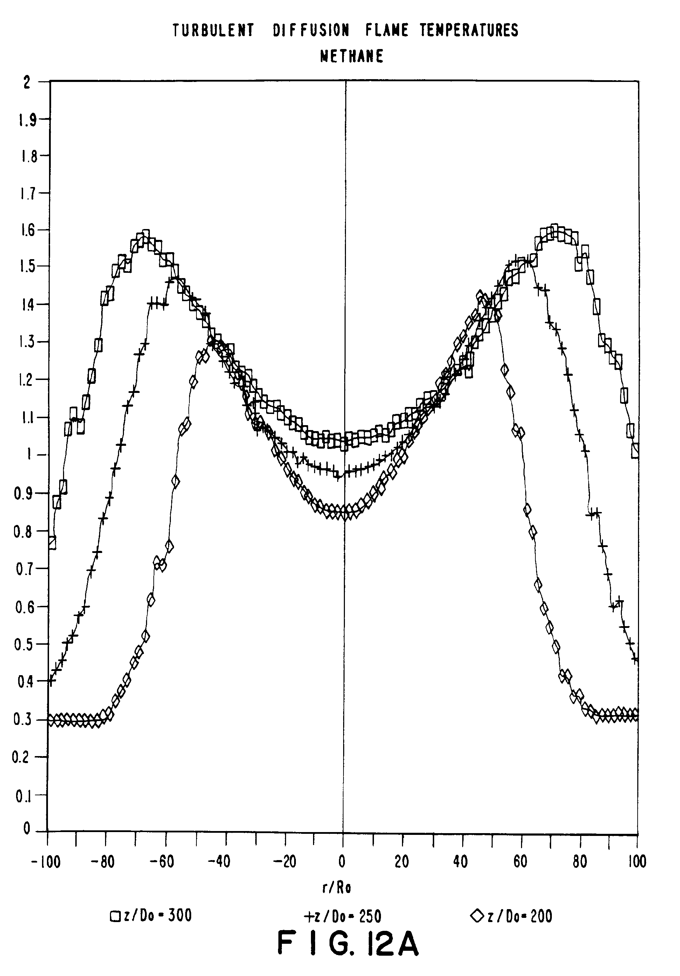

FIGURE 11A shows a vertical temperature scan along line B-B in FIGURE 6B for a burner and a conventional lance of the type shown in FIGURE 1. As shown, the temperature peaked across the flame and the bottom temperature gradient was very steep. This was expected from the introduction of cold oxygen to the bottom part of the flame.

FIGURE 11B shows a similar vertical temperature scan along B-B in FIGURE 6B for a burner and the subject lance shown in FIGURE 3. As shown in FIGURE 11, two temperture peaks occur. The first temperature peak is where the main flame projected from the burner and the second temperature peak is located where the planar oxygen lance is positioned. This second temperature peak is the result of the attraction of combustible gases, oil droplets, and the flame by the low pressure field of the planar oxygen jet. It is this strong effect, which was not achieved with conventional lances, which enables favorable deformation and positioning of the flame.

Video thermography of the flames with conventional oxygen lances showed narrow, pencil-like hot temperature zones resulted in non-homogenous temperature profiles in the glass melt as shown in FIGURE 10A as a result of locally high heat-fluxes.

Video thermography of the flames with the oxygen lance of the present invention showed uniformly enhanced flame-temperature profiles. The absence of hot temperature zones in the flames with the present

6

method resulted in homogenous temperature profiles in the glass melt as a result of uniform heat fluxes as shown in FIGURE 10B.

The results of the foregoing tests are shown in TABLE 1. The third column in TABLE 1 shows that the uniformity of the glass melt temperature has increased about 400% by using the method of the present invention. This effect is remarkable in view of the large thermal inertia of the furnace, as in this test only two of the total eighteen burners were equipped with the oxygen lances of the present invention.

Table 1:

Summary of Typical Temperature Profiles of Glass-melt Surfaces During Reversal

| Run | Type of Lance | Tmax [K] | Tmin [K] | $\frac{Tmax-Tmin}{Tc}$ |
|------|------|------|------|------|
| Control | None | 1588 | 1650 | 0.72 |
| Control | Conventional | 1580 | 1666 | 1.00 |
| 1 | Non circular (1 cycle) | 1564 | 1588 | 0.28 |
| 2 | Non circular (24 hrs) | 1675 | 1697 | 0.26 |

Tc = Tmax - Tmin for the conventional lances

As can be seen from the results provided in TABLE 1, the novel flat-jet lances of the present invention surprisingly produced significantly improved uniformity of the temperature of the glass-melt surface as compared to a conventional oxygen lance.

Example 2

The effect on flame geometry development between a non circular lance (FIGURE 2) and an axisymmetric lance (FIGURE 1) was quantitatively compared. For this comparison, a flat jet of oxygen (supplied from a non circular lance having a rectangular outlet whose aspect ratio is greater than 30) was chosen as characteristic for a non circular jet of a reaction-rate enhancing gas blend. The flat jet was directed virtually parallel to a high-speed, initially axisymmetric, turbulent diffusion flame. The initially axisymmetric turbulent diffusion flame was generated by igniting a high-velocity jet of methane emerging from a small round tube. The high Reynolds (Re) numbers at the burner tip are typical for industrial-type burner systems. The particular operating conditions are given in TABLE II.

Table II:

Operating Conditions

| Function | Gas | Avg Velocity [m/s] | Size mm (Inches) | Re |
|------|------|------|------|------|
| Flame Envir | Air | 0.62 | 102 (4.00) dia | – |
| Burner | Methane | 54.95 | 2.57 (0.101) dia | 8736 |
| Round-jet | Oxygen | 52.7 | 1.60 (0.063) dia | 5261 |
| Flat-jet | Oxygen | 52.7 | 0.25 x 8.6 (0.01 x 0.338) | – |

Temperature profiles across the flame were taken with thermocouples in radial (r) direction at several axial (z) locations downstream of the burner tip. The thermocouples consisted of a very small (0.051 mm) (0.002") thermocouple bead resulting from a head-to-head weld between PtRd 6%/PtRd 30% wires. The small diameter bead resulted in sufficient spacial resolution. As is common in combustion research, the wires were coated

7

with a glass-like silica layer to prevent catalytical errors in the temperature measurements. Furthermore, with the well-known thermocoupleplacement technique to minimize heat-conduction errors, the temperature profiles were representative of the true temperature profiles in the flame.

FIGURE 12A shows the temperature profiles of the unmodified, ie no gas lance, methane turbulent diffusion flame at several locations downstream of the burner tip wherein:

z = the distance downstream from the burner tip

r = the distance from the burner axis

$D_o$ = the burner diameter

$R_o$ = the burner radius

The operating conditions are listed in TABLE II.

FIGURE 12A shows the well-known characteristic expansion of the M-shaped temperature profiles downstream of the burner. As the gas moves downstream, it heats up and reacts around the temperature-peak zones. The (turbulent) "diffusion" processes and the expansion of the hot gases tend to decrease the temperature gradients as the flame moves downstream of the burner tip. These temperature profiles provide a basis for comparing a flame modified with a conventional axisymmetric lance and a non circular lance in accordance with the subject method.

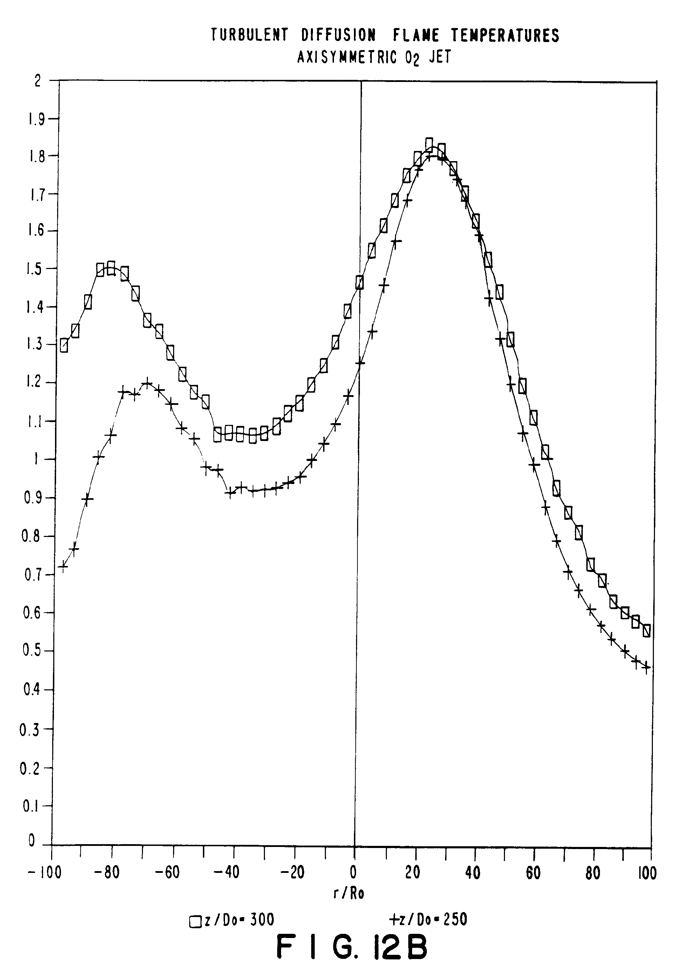

The modification of the temperature profiles with an axisymmetric oxygen jet is shown in FIGURE 12B. The axis of the jet was located 2.37 burner diameters to the right of the burner axis and was directed virtually parallel to the burner axis.

The temperature peak in FIGURE 12A displays a dramatic increase at the region of oxygen injection. However, the temperature profiles show smaller temperature gradients at the right, "leading edge", side of the flame where the oxygen was introduced. Furthermore, a comparison of FIGURES 12A and 12B shows that the left flame zone has been displaced away from the burner axis.

FIGURE 12C shows the dramatic changes in the temperature profiles using the lance of the present invention. The axis of the non circular jet was located 2.37 burner diameters to the right of the burner axis and was directed virtually parallel to the burner axis. Similarly, as with the axisymmetric lance, the dramatic temperature increase over the case without oxygen injection at the right, "leading edge", side of oxygen introduction is maintained throughout the interval of measurements.

However, several important improvements of the flame profile are obtained. The leading-edge temperature gradients are not only approximately 40% higher than the unlanced flame, but are about 50% higher than the axisymmetric lance flame. In addition, the flame-spread angle, ie the angle of an equivalent cone formed by the locus of the maximum temperatures in the flame is about 50% lower than the axisymmetric lanced flame and about 70% lower than the unlanced flame. The results are shown in TABLE III.

## Table III:

### Summary of Results

| z/$D_o$ | Turbulent flame | | Turb. Flame + axisym $O_2$ jet | | Turb. Flame + flat $O_2$ jet | |
|---|---|---|---|---|---|---|
| | dT/dr [K/cm] | Flame spread angle | dT/dr [K/cm] | Flame spread angle | dT/dr [K/cm] | Flame spread angle |
| 200 | −362.5 | | | | −457.3 | |
| 250 | −259.9) | | −233.7) | | −346.5) | |
| | ) | 22.4 | ) | 13.3 | ) | 6.8 |
| 300 | −208.9) | | −193.9) | | −298.4) | |

Both the axisymmetric and the non circular lances create a low static-pressure zone around $r/R_o$=4.74 where the oxygen is injected. As a result, the high temperature zones on the right side in the M-shaped temperature profiles of FIGURE 12A are displaced to the left, towards $r/R_o$=4.74. For the axisymmetric lance, the high temperature zone on the left (FIGURE 12B) is displaced further away from the burner axis. For the non circular lance, however, the high temperature zone on the left is displaced toward the low static pressure zone of oxygen injection as shown in FIGURE 12C. Thus, the non circular lance not only displaces the right high-temperature reaction zone but also the left high-temperature zone which deforms the flame into a more favorable geometry. As shown in FIGURE 12C, not only flame deformation, but also displacement of the entire flame has occured which provides greater control over flame placement.

Moreover, it is apparent from a comparison of FIGURES 12A and 12B that the spreading of the flame in the direction of the line from the center of the burner tip to the centre of the lance is much more limited by the non-axisymmetric lance. In addition, a comparison of FIGURES 12B and 12C shows that the non circular lancing method is superior in maintaining a desirable high temperature gradient at the location where the oxygen is introduced.

Example 3

The effect of 'global' enhancement of the flame displacement and deformity of the type of lance/burner arrangement shown in FIGURE 7A was quantitatively determined.

Oxygen was selected as the reaction rate enhancing gas and methane as the fuel. The Reynolds (Re) numbers at the burner tip are typical for an industrial-type burner system. The particular operating conditions are shown in TABLE IV.

Table IV:

Operating Conditions

| Function | Gas | Avg Velocity [m/s] | Size, mm [Inches] |
|---|---|---|---|
| Flame Envir | Air | 0.62 | 102 (4.00) dia |
| Fuel Nozzle | Methane | 16.1 | 8.48 x 9.5 (0.334 x 0.374) |
| Gas Nozzle | Oxygen | 42.1 | 8.48 x 7.01 (0.334 x 0.276) |

The separation between oxygen exit port 31 and the fuel exit port 64 as shown in FIGURE 7A was 0.2 inch. The Carthesian coordinate system (axes X, Y, Z) shown in FIGURE 7A has the origin located in the center between the oxygen exit port 31 and the fuel exit port 64 at the point of symmetry in the Y-direction, and on the face of the burner.

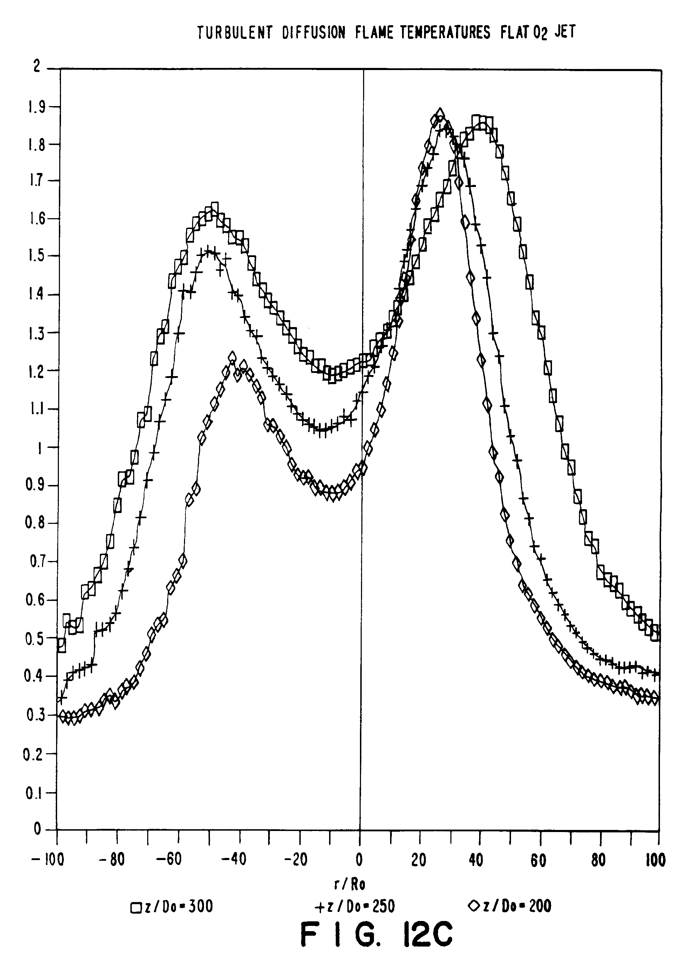

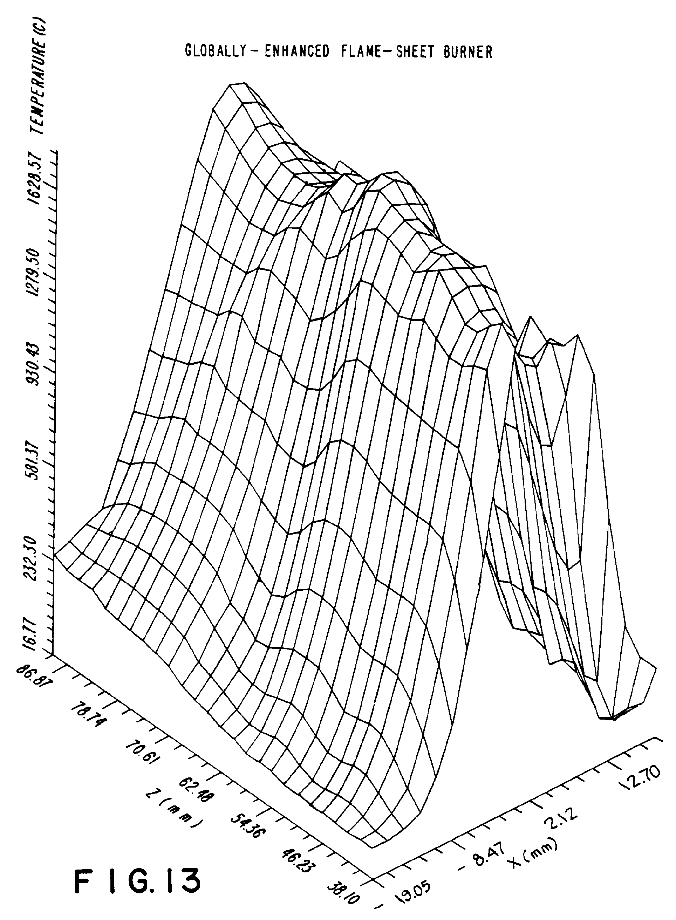

Similar procedures as described in Example 2 were employed. Temperature profiles across the flame were taken in the X-axis direction across the globally-enhanced flame sheet at several locations downstream of the burner. The results are plotted in FIGURE 13.

As shown in FIGURE 13, measurements taken close to the burner show the characteristic "M" profile. The lower temperatures in the center of the profile result from "cold" unreacted fuel. Shortly downstream, however, only a hot profile was detected. In addition, there was virtually no flame expansion in the X-direction.

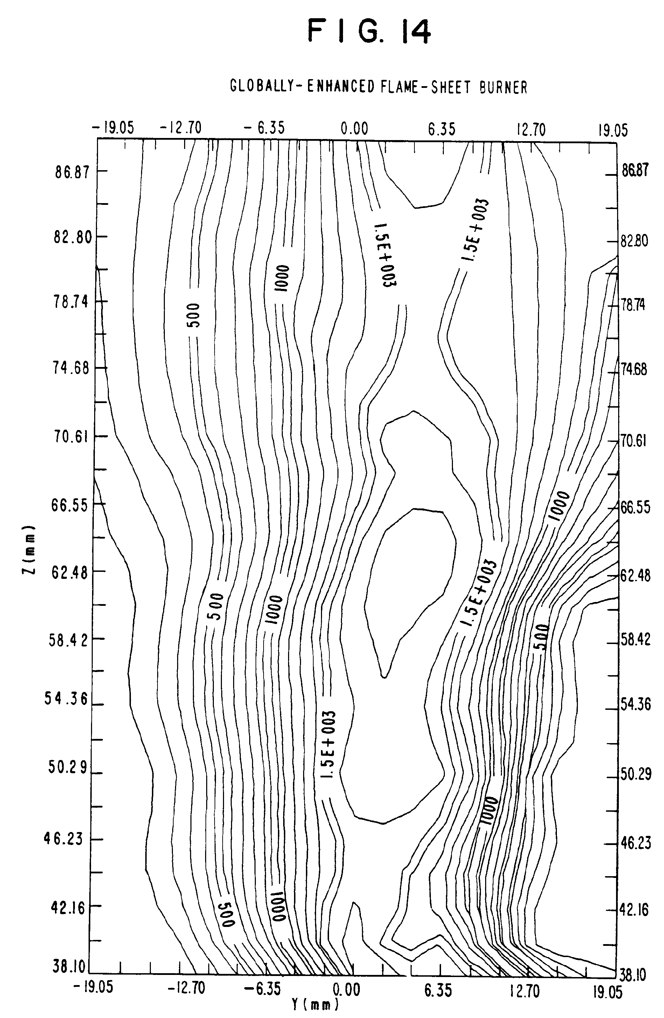

Referring to FIGURE 14, the temperature profile on the oxygen side (left side of FIGURE 14) is well-defined, sharp and planar. The isotherms on the fuel side (right side of FIGURE 14) show the strong attraction of the flame to the oxygen jet. The significant curvature of the isotherms on the fuel side are indicative of the desired aerodynamically reduced pressure field which controls the favorable positioning and desired shape of the flame.

**Claims**

1. Apparatus for providing relatively uniform heat transfer to a surface comprising a burner 44 which provides a flame extending over said surface and a gas lance 4 having outlet means 5 for emitting a jet of reaction-rate enhancing gas and being positioned so as to create an aerodynamically reduced pressure that displaces the flame toward the surface, characterised in that the outlet means 5 has a non-circular shape and diverges in the axial direction thereby emitting a flat non-circular jet. such that the flame is extended transversely and flattened.

2. Apparatus according to claim 1, characterised in that the lance 4 comprises a body 6 having an inlet end 7 for receiving a reaction-rate enhancing gas from a source thereof, and an opposed outlet end 5 in flow communication with the inlet end by way of a passage, wherein the outlet means 5 has a rectangular opening 9, the longer sides of the rectangle being disposed generally transversely to the surface to be heated.

3. Apparatus according to claim 1, characterised in that the lance 4 comprises a body 6 having an inlet end 7 for receiving a reaction-rate enhancing gas from a source thereof, and an opposed outlet means 5 in flow communication with the inlet end by way of a passage, and the outlet means 5 has an ellipsoidal opening, the lance 4 being disposed such that its major axis extends generally horizontally.

4. Apparatus according to claim 1, characterised in that the lance 4 comprises a plurality of gas-emitting channels 32 having outlets such that a fan-shaped jet of rate-enhancing gas is emitted.

5. Apparatus according to claim 2 or claim 3, characterised in that the burner 44 has an outlet for fuel defining an opening of essentially the same shape as the opening at the outlet of the lance

6. Apparatus according to any one of claims 2 to 4, characterised in that the burner 44 has an outlet for fuel defining a non circular opening.

7. Apparatus according to any one of the preceding claims, in that the axis of the gas lance 4 extends in parallel to the axis of the burner 44.

8. A method of heating a surface, comprising burning a fuel to provide a flame extending across and above the surface, and supplying a jet of rate-enhancing gas between the flame and the surface create an aerodynamically reduced pressure field thereby deforming the flame and displacing it towards the surface, characterised in that said jet is flat, diverging in the axial direction and non-circular and extends the flame across the surface and flattens it whereby more uniform heating of the surface is facilitated.

9. A method according to claim 8, characterised in that the jet is both wide and relatively flat.

10. A method according to any one of claim 8 or claim 9, characterised in that the jet diverges in a generally horizontal plane.

11. A method according to any one of claims 8 to 10, characterised in that the rate-enhancing gas is oxygen.

## Patentansprüche

1. Vorrichtung zum Schaffen eines relativ gleichförmigen Wärmetransfers zu einer Oberfläche mit einem Brenner 44, der eine sich über die Oberfläche erstreckende Flamme schafft, und einer Gaslanze 4, die Auslaßmittel 5 zum Emittieren eines Strahls reaktionsratensteigernden Gases aufweist und positioniert ist, um einen aerodynamisch reduzierten Druck zu erzeugen, der die Flamme auf die Oberfläche zu verschiebt,
dadurch gekennzeichnet,
daß das Auslaßmittel 5 eine nicht-kreisförmige Form aufweist und in der axialen Richtung divergiert, wodurch ein flacher nicht-kreisförmiger Strahl derart emittiert wird, daß die Flamme transversal ausgedehnt und abgeflacht ist.

2. Vorrichtung nach Anspruch 1,
dadurch gekennzeichnet,
daß die Lanze 4 einen Körper 6 umfaßt, der ein Einlaßende 7 zum Empfangen eines reaktionsratensteigernden Gases von einer Quelle davon und ein gegenüberliegendes Auslaßende 5 in Strömungskommunikation mit dem Einlaßende mittels eines Durchgangs aufweist, worin das Auslaßmittel 5 eine rechteckige Öffnung 9 aufweist und die längeren Seiten des Rechtecks allgemein transversal zur zu erwärmenden Oberfläche angeordnet sind.

3. Vorrichtung nach Anspruch 1,
dadurch gekennzeichnet,
daß die Lanze 4 einen Körper 6 umfaßt, der ein Einlaßende 7 zum Empfangen eines reaktionsratensteigernden Gases von einer Quelle davon und ein gegenüberliegendes Auslaßmittel 5 in Strömungskommunikation mit dem Einlaßende mittels eines Durchgangs aufweist, und das Auslaßmittel 5 eine ellipsoide Öffnung aufweist, wobei die Lanze 4 derart angeordnet ist, daß sich ihre Hauptachse allgemein horizontal erstreckt.

4.  Vorrichtung nach Anspruch 1,
    dadurch gekennzeichnet,
    daß die Lanze 4 eine Vielzahl von gasemittierenden Kanälen 32 umfaßt, welche Auslässe derart aufweisen, daß ein fächerförmiger Strahl ratensteigernden Gases emittiert wird.

5.  Vorrichtung nach Anspruch 2 oder Anspruch 3,
    dadurch gekennzeichnet,
    daß der Brenner 44 einen Auslaß für Brennstoff aufweist, der eine Öffnung von im wesentlichen der gleichen Form wie die Öffnung am Auslaß der Lanze definiert.

6.  Vorrichtung nach einem der Ansprüche 2 bis 4,
    dadurch gekennzeichnet,
    daß der Brenner 44 einen Auslaß für Brennstoff aufweist, der eine nicht-kreisförmige Öffnung definiert.

7.  Vorrichtung nach einem der vorhergehenden Ansprüche, in welcher sich die Achse der Gaslanze 4 parallel zur Achse des Brenners 44 erstreckt.

8.  Ein Verfahren zur Erwärmung einer Oberfläche, welches umfaßt, daß ein Brennstoff verbrannt wird, um eine sich über die Oberfläche hinweg und oberhalb dieser erstreckende Flamme zu schaffen, und ein Strahl ratensteigernden Gases zwischen die Flamme und die Oberfläche geliefert wird, um ein Feld aerodynamisch reduzierten Drucks zu erzeugen und dadurch die Flamme zu deformieren und sie auf die Oberfläche zu zu verschieben,
    dadurch gekennzeichnet,
    daß der Strahl flach ist, in der axialen Richtung divergiert und nicht-kreisförmig ist und die Flamme über die Oberfläche hinweg ausdehnt und sie abflacht, wodurch ein gleichförmigeres Erwärmen der Oberfläche erleichtert wird.

9.  Ein Verfahren nach Anspruch 8,
    dadurch gekennzeichnet,
    daß der Strahl sowohl breit als auch relativ flach ist.

10. Ein Verfahren nach Anspruch 8 oder Anspruch 9,
    dadurch gekennzeichnet,
    daß der Strahl in einer allgemein horizontalen Ebene divergiert.

11. Ein Verfahren nach einem der Ansprüche 8 bis 10,
    dadurch gekennzeichnet,
    daß das ratensteigernde Gas Sauerstoff ist.

**Revendications**

1.  Appareil destiné à assurer un transfert de chaleur relativement uniforme vers une surface, comprenant un brûleur (44) qui forme une flamme disposée sur la surface, et une lance (4) à gaz ayant un dispositif (5) de sortie destiné à émettre un jet de gaz qui augmente la vitesse de réaction et disposé afin qu'il crée une pression réduite aérodynamiquement qui déplace la flamme vers la surface, caractérisé en ce que le dispositif de sortie (5) a une configuration non circulaire et diverge dans la direction axiale en émettant un jet plat non circulaire de manière que la flamme s'étende transversalement et s'aplatisse.

2.  Appareil selon la revendication 1, caractérisé en ce que la lance (4) possède un corps (6) ayant une extrémité d'entrée (7) destinée à recevoir le gaz qui augmente la vitesse de réaction d'une source de gaz, et une extrémité opposée de sortie (5) communiquant avec l'extrémité d'entrée par un passage, le dispositif de sortie (5) ayant une ouverture rectangulaire (9) dont les plus grands côtés sont disposés en direction générale transversale à la surface à chauffer.

3. Appareil selon la revendication 1, caractérisé en ce que la lance (4) possède un corps (6) ayant une extrémité d'entrée (7) destinée à recevoir un gaz qui accroît la vitesse de réaction et qui provient d'une source de gaz, et un dispositif opposé de sortie (5) qui communique avec l'extrémité d'entrée par un passage, et le dispositif de sortie (5) à une ouverture ellipsoïdale, la lance (4) étant disposée de manière que son axe ait une direction générale horizontale.

4. Appareil selon la revendication 1, caractérisé en ce que la lance (4) possède plusieurs canaux (32) d'émission de gaz ayant des sorties telles qu'un jet en éventail du gaz qui augmente la vitesse de réaction soit émis.

5. Appareil selon la revendication 2 ou 3, caractérisé en ce que le brûleur (44) a une sortie de combustible qui délimite une ouverture ayant pratiquement la même configuration que l'ouverture formée à la sortie de la lance.

6. Appareil selon l'une des revendications 2 à 4, caractérisé en ce que le brûleur (44) a une sortie de combustible délimitant une ouverture non circulaire.

7. Appareil selon l'une quelconque des revendications précédentes, dans lequel l'axe de la lance (4) à gaz est parallèle à l'axe du brûleur (44).

8. Procédé de chauffage d'une surface, comprenant la combustion d'un combustible pour la formation d'une flamme disposée sur la surface et au-dessus de celle-ci et de transmission d'un jet de gaz favorisant la vitesse de réaction entre la flamme et la surface avec création d'un champ de pression réduit aérodynamiquement de manière que la flamme soit déformée et déplacée vers la surface, caractérisé en ce que le jet est plat, divergent en direction axiale et non circulaire et il étend la flamme sur la surface et l'aplatit de manière qu'un chauffage plus uniforme de la surface soit facile.

9. Procédé selon la revendication 8, caractérisé en ce que le jet est à la fois large et relativement plat.

10. Procédé selon la revendication 8 ou 9, caractérisé en ce que le jet diverge dans un plan horizontal de façon générale.

11. Procédé selon l'une quelconque des revendications 8 à 10, caractérisé en ce que le gaz qui augmente la vitesse de réaction est l'oxygène.

F I G. 1

F I G. 2

F I G. 3

F I G. 4

F I G. 5

F I G. 6A

EP 0 335 728 B1

F I G. 6B

PRIOR ART

F I G. 8

F I G. 9

F I G. 7A

F I G. 7B

F I G. 7C

17

EP 0 335 728 B1

F I G. IOA

F I G. IOB

F I G. IIA

F I G. IIB

18

## TURBULENT DIFFUSION FLAME TEMPERATURES
## METHANE

□ z/Do = 300      + z/Do = 250      ◇ z/Do = 200

## F I G. 12A

TURBULENT DIFFUSION FLAME TEMPERATURES
AXISYMMETRIC O$_2$ JET

□ z/Do = 300          + z/Do = 250

F I G. 12 B

20

TURBULENT DIFFUSION FLAME TEMPERATURES FLAT $O_2$ JET

$\square z/D_0 = 300$     $+ z/D_0 = 250$     $\diamond z/D_0 = 200$

# F I G. 12C

EP 0 335 728 B1

FIG. 13

22

# F I G. 14

GLOBALLY-ENHANCED FLAME-SHEET BURNER

23